# EUROPÄISCHE PATENTSCHRIFT

(11) **EP 1 732 666 B1**
(45) Veröffentlichungstag und Bekanntmachung des Hinweises auf die Patenterteilung: **06.02.2008**
(21) Anmeldenummer: 05739489.2
(22) Anmeldetag: 06.04.2005
(51) Int. Cl.: B01D 46/14, B01J 2/16

(54) **PROZESSAPPARATUR ZUM BEHANDELN PARTIKELFÖRMIGEN GUTS**
PROCESS APPARATUS FOR TREATING PARTICULATE ITEMS
APPAREIL DE TRAITEMENT DE MATIERE PARTICULAIRE

(30) Priorität: 07.04.2004 DE 102004018427
(43) Veröffentlichungstag der Anmeldung: 20.12.2006
(73) Patentinhaber: Hüttlin, Herbert, 79539 Lörrach (DE)
(72) Erfinder: HÜTTLIN, Herbert, 79539 Lörrach (DE); VIERNSTEIN, Helmut, A-1180 Wien (AT)
(74) Vertreter: Heuckeroth, Volker
(86) Internationale Anmeldenummer: PCT/EP2005/003582
(87) Internationale Veröffentlichungsnummer: WO 2005/097296

(56) Entgegenhaltungen:
- EP-A- 0 172 530
- DE-A1- 10 125 732
- US-A1- 2004 013 761

## Beschreibung

Die Erfindung betrifft eine Prozessapparatur zum Behandeln partikelförmigen Guts, mit einem Produktbehälter zur Aufnahme des partikelförmigen Guts, der einen luftdurchlässigen Boden zum Zuführen von Prozessluft in dem Produktbehälter aufweist, einem sich nach oben an den Produktbehälter anschließenden Filterdom, und einem im Filterdom angeordneten Filter zum Entstauben der Prozessluft, wobei der Filter eine Mehrzahl von Filterelementen aufweist, die in Umfangsrichtung um eine Gehäusemittelachse verteilt voneinander beabstandet angeordnet sind und jeweils eine Ausdehnung quer und parallel zur Gehäusemittelachse aufweisen.

Eine solche Prozessapparatur ist aus DE-A-101 25 732 bekannt.

Eine derartige Prozessapparatur wird beispielsweise zum Mischen, Trocknen, Granulieren, Pelletieren und/oder Coaten des Guts verwendet.

Beim Granulieren beispielsweise werden nahezu staubfeine Gutpartikel in dem Produktbehälter zu größeren Partikeln agglomeriert, und beim Coaten beispielsweise erhalten solche staubfeinen Partikel des Ausgangsgutes einen Überzug.

Das partikelförmige Gut wird während der Behandlung in dem Produktbehälter mittels Prozessluft bewegt, die von unten durch den luftdurchlässigen Boden in den Produktbehälter eingeleitet wird.

Bei der bekannten Prozessapparatur ist der luftdurchlässige Boden durch ein Siebblech gebildet.

Die Prozessluft, die vorrangig zum Bewegen des partikelförmigen Guts im Produktbehälter dient, aber beispielsweise auch Trocknungsaufgaben übernehmen kann, strömt von dem oben offenen Produktbehälter weiter in den Filterdom, durchströmt dabei den im Filterdom angeordneten Filter und wird nach Durchströmen des Filters aus der Prozessapparatur als entstaubte Prozessluft abgeführt.

Der Filter der bekannten Prozessapparatur weist eine Mehrzahl von Filterelementen auf, die sternartig um die Gehäusemittelachse der Prozessapparatur herum verteilt voneinander beabstandet angeordnet sind. Bei der bekannten Prozessapparatur verläuft die wand des Filterdoms parallel zur Gehäusemittelachse, d.h. genau genommen vertikal, und die einzelnen Filterelemente des Filters dieser bekannten Prozessapparatur reichen in Richtung quer zur Gehäusemittelachse bis zur Wand des Filterdomes, d.h. sind von dieser nicht beabstandet. Der Außendurchmesser des Filters dieser bekannten Prozessapparatur entspricht somit dem Innendurchmesser des Filterdoms.

Die von dem Produktbehälter durch den Filterdom zum Filter strömende Prozessluft führt insbesondere zu Beginn des Behandlungsprozesses, wenn die Partikel zumindest teilweise noch nicht mit einem Überzugsmedium überzogen und somit noch sehr leicht sind, ein Teil des partikelförmiges Guts mit sich zum Filter. Die Aufgabe des Filters besteht nun zum einen darin, die Prozessluft von den mitgeführten Partikeln zu trennen, d.h. die Prozessluft zu entstauben, zum anderen besteht eine wesentliche Funktion des Filters darin, dafür Sorge zu tragen, dass die bis zum Filter mitgeführten Partikel dem eigentlichen Behandlungsprozess im Produktbehälter wieder zugeführt werden können.

Der in dem eingangs genannten Dokument beschriebene Filter gewährleistet prinzipiell diese Aufgaben der Trennung von Prozessluft und Gutpartikeln und der Rückführung der getrennten Gutpartikel in den Produktbehälter, jedoch ist seine wie zuvor beschriebene Einbaulage in dem Filterdom nachteilig, weil der Filter von der Prozessluft nur von unten angeströmt werden kann. Hinzu kommt, dass der als Siebboden ausgebildete luftdurchlässige Boden vertikale auf und ab pulsierende Luftsäulen über den gesamten Produktbehälterquerschnitt hervorruft, die erhebliche Mengen vom Produkt mitreißen. Daraus kann sich eine ungleichmäßige Anhaftung von Gutteilchen an der unteren Filterfläche der einzelnen Filterelemente ergeben, woraus ein rasches und u.U. vollständiges Zuwachsen der unteren Filterfläche resultieren kann. Dies ist damit zu begründen, dass die Unterseite des Filters partiell übermäßig stark mit Gutpartikeln belastet wird, und somit spontan nicht mehr als Filterfläche zur Verfügung steht, so dass auch der Rest der noch offenen aktiven Filterfläche exponentiell schnell zuwächst.

Der Erfindung liegt daher die Aufgabe zugrunde, eine Prozessapparatur der eingangs genannten Art dahingehend weiterzubilden, dass die vorstehend genannten Nachteile vermieden werden, d.h. dass ein schnelles Zuwachsen der Filterfläche mit Gutpartikeln vermieden wird.

Erfindungsgemäß wird diese Aufgabe hinsichtlich der eingangs genannten Prozessapparatur dadurch gelöst, dass der Filter außenumfänglich von einem sich von unten nach oben verjüngenden Anströmelement umgeben ist, das von dem Filter in Richtung quer zur Gehäusemittelachse beabstandet ist, und dessen unteres Ende an der Wand des Filterdoms anliegt, so dass zumindest die entlang der Wand des Filterdoms und entlang des Anströmelements strömende Prozessluft seitlich in den Filter strömen kann.

Erfindungsgemäß ist der Filter demnach so dimensioniert, dass die einzelnen Filterelemente nicht bis zur Wand des Filterdoms reichen, sondern dass ein ausreichender Abstand zwischen dem Filter und der Wand des Filterdoms vorhanden ist. Dadurch ist es möglich, dass zumindest ein Teil der Prozessluft außenseitig entlang des Filters strömen kann. Außerdem ist der Filter von einem sich nach oben verjüngenden Anströmelement umgeben, das das an der Wand des Filterdomes nach oben strömende Gemisch aus partikelförmigem Gut und Prozessluft schließlich so beeinflusst, dass dieses Gemisch in die Abstände zwischen den einzelnen Filterelementen und seitlich in die Filterelemente strömen kann, wodurch die Gesamtfilterfläche des Filters wesentlich gleichmäßiger von der Prozessluft durchströmt wird, so dass das zuvor erwähnte schnelle Zuwachsen eines bestimmten Teils der Filterfläche des Filters vermieden wird. Der zusätzliche Vorteil der erfindungsgemäßen Ausgestaltung besteht darin, dass wegen der geringeren Belastung bestimmter Areale der Filterfläche das partikelförmige Gut eher wieder von dem Filter in den Produktbehälter zurückfällt, weil die Anhafttendenz an bestimmten Arealen der Filterfläche wesentlich verringert ist. Die erfindungsgemäße Anströmtechnik des Filters führt somit nicht nur zu einer weniger starken Belastung des Filters bzw. zu einer verringerten Gefahr des Zuwachsens bestimmter Filterareale, sondern verbessert auch die Rückführung der von der Prozessluft bis zum Filter mitgeführten Gutpartikel in den Produktbehälter und damit in den Behandlungsprozess.

Das Anströmelement wirkt als Strömungsleitelement, das die Prozessluftströmung, insbesondere diejenige, die sich entlang der Wand des Filterdoms nach oben ausbreitet, zur Gehäusemittelachse hin und damit zwischen die einzelnen Filterelemente umlenkt, wobei die Prozessluft dann die einzelnen Filterelemente durchströmt.

In einer bevorzugten Ausgestaltung ist das Anströmelement ein Konus.

Die Ausgestaltung des Anströmelements als Konus hat den Vorteil einer leichten Herstellbarkeit des Anströmelements aus einem Blech.

In einer Variante dazu kann das Anströmelement von der Gehäusemittelachse aus gesehen auch konkav gewölbt sein.

Eine konkav gewölbte Ausgestaltung des Anströmelements kann die Prozessluftleitfunktion des Anströmelements zur Gehäusemittelachse hin noch weiter verbessern.

Das Anströmelement kann auch in unterschiedlichen Höhen in Bezug auf die Gehäusemittelachse einzelne gekrümmte Leitflächenelemente aufweisen, so dass die Prozessluft in unterschiedlichen Höhen gleichmäßig zwischen die Filterelemente des Filters eingeleitet werden kann.

In einer weiteren bevorzugten Ausgestaltung ist ein unteres Ende des Anströmelements etwa auf Höhe eines unteren Endes des Filters und ein oberes Ende des Anströmelements etwa auf Höhe eines oberen Endes des Filters angeordnet.

In dieser Ausgestaltung ist die die Prozessluft zur Gehäusemittelachse hin umlenkende Wirkfläche des Anströmelements auf die Höhe des Filters beschränkt, was den Vorteil hat, dass das Anströmelement nicht zu einer Vergrößerung der Bauhöhe des Filterdomes führt. Im Bereich des unteren Endes nimmt das an der Wand des Filterdoms anliegende untere Ende des Anströmelements die sich entlang der Wand des Filterdoms ausbreitende Prozessluftströmung stetig auf und lenkt diese dann stetig in Richtung zur Gehäusemittelachse um, so dass die Prozessluft zwischen die einzelnen Filterelemente strömen kann.

In einer weiteren bevorzugten Ausgestaltung verläuft eine Außenkontur des Filters etwa parallel zur Gehäusemittelachse, so dass das Anströmelement im unteren Bereich weiter vom Filter beabstandet ist als in einem oberen Bereich.

Hierbei ist von Vorteil, dass der untere Bereich des Filters, der von der Prozessluftströmung zuerst erreicht wird, wobei die Prozessluft in diesem Bereich noch die meisten Gutpartikel mit sich führt, auf Grund des größeren Abstandes vom Anströmkonus weniger stark angeströmt wird, so dass die Belastung des unteren Bereichs des Filters im Vergleich zum oberen Bereich nicht erhöht, sondern im Wesentlichen gleich ist, was gerade bei der bekannten Prozessapparatur nicht gewährleistet war.

In bevorzugten praktischen Ausgestaltungen beträgt ein Abstand zwischen dem Anströmelement und dem Filter im Bereich des unteren Endes des Filters etwa 1/5 bis etwa 1/2 der Ausdehnung des Filters in Richtung quer zur Gehäusemittelachse.

Ebenso ist es in praktischen Ausgestaltungen bevorzugt, wenn ein Abstand zwischen dem Anströmelement und dem Filter im Bereich des oberen Endes des Filters etwa 0 bis etwa 1/5 der Ausdehnung des Filters in Richtung quer zur Gehäusemittelachse beträgt.

In einer weiteren bevorzugten Ausgestaltung erweitert sich eine Wand des Produktbehälters von unten nach oben, und die Wand des Filterdoms erweitert sich von unten nach oben ebenfalls, jedoch unter einem kleineren Winkel zur Gehäusemittelachse als der Produktbehälter.

Diese Maßnahme hat den Vorteil, dass die entlang der Produktbehälterwand nach oben strömende Prozessluft zunächst eine von der Gehäusemittelachse abgewandte Bewegungskomponente erhält, die dann im Bereich der Wand des Filterdoms auf Grund des kleineren Öffnungswinkels des Filterdoms weniger stark von der Gehäusemittelachse weg gerichtet ist, um dann durch das Anströmelement eine zur Gehäusemittelachse hin gerichtete Bewegungskomponente zu erhalten. Die Prozessluftströmung ist im Bereich der Wand des Produktbehälters, der Wand des Filterdoms und des Anströmelements entsprechend "bauchig", wodurch eine besonders homogene Wandungsströmung der Prozessluft bis in den Bereich des Filters erzielt wird, so dass auch das Gemisch aus Prozessluft und Gutpartikeln besonders homogen am Wandungsbereich der Prozessapparatur aufsteigen kann, um dann im Bereich des Filters getrennt zu werden, so dass die Gutpartikel schließlich wieder nach unten in den Produktbehälter zum aktiven Behandlungsprozess zurückfallen können.

In einer weiteren bevorzugten Ausgestaltung ist der Boden so ausgebildet, dass er die von unterhalb des Bodens zugeführte Prozessluft mit im Wesentlichen horizontaler, zu einer Wand des Produktbehälters gerichteter Bewegungskomponente in den Produktbehälter einleitet.

Diese Maßnahme hat den wesentlichen Vorteil, dass die sich im Produktbehälter und im Filterdom einstellende Prozessluftströmung nahezu ausschließlich entlang des Wandungsbereichs des Produktbehälters bzw. Filterdoms ausbreitet, so dass gerade in Verbindung mit dem erfindungsgemäß vorgesehenen Anströmelement im Bereich des Filters gewährleistet ist, dass der Filter im Wesentlichen nicht von unten, sondern im Wesentlichen von der Seite her mit der Prozessluft beaufschlagt wird, oder zumindest eine Gleichverteilung der Belastung der Unterseite des Filters im Vergleich zur übrigen Filterfläche des Filters erreicht wird. Gerade die Kombination eines wie zuvor beschriebenen Bodens mit dem Anströmelement im Bereich des Filters hat in praktischen Versuchen zu optimalen Ergebnissen der Prozessluftführung im Sinne einer gleichmäßigen Durchströmung des Filters und damit einer verbesserten Rückführung der Gutpartikel in den Produktbehälter geführt.

Ein solcher Boden wie zuvor beschrieben ist insbesondere in der deutschen Patentanmeldung 102 48 116.5 desselben Anmelders beschrieben.

In einer weiteren bevorzugten Ausgestaltung sind die Filterelemente als einzelne separate Taschen ausgebildet, die etwa sternförmig um die Gehäusemittelachse herum angeordnet sind.

Ein solcher Filter ist beispielsweise in dem Dokument DE-A-101 25 732 desselben Anmelders beschrieben, wobei insbesondere die dort in den Figuren 12 und 13 dargestellte Ausgestaltung für die Zwecke der vorliegenden Erfindung verwendet werden kann. Die einzelnen taschenförmigen Filterelemente sind beispielsweise aus einzelnen Edelstahlkörben gebildet, auf denen ein stabiles Polyethylen-Filtergewebe statisch entlastet aufliegt.

In einer weiteren bevorzugten Ausgestaltung ist oberhalb des Filters eine Abluftkammer zur Abführung der entstaubten Prozessluft aus der Prozessapparatur heraus angeordnet, in der ein Saugdruck ansteht, so dass die Prozessluft durch die einzelnen Filterelemente nach oben heraus abgesaugt wird.

Der oberhalb des Filters anstehende Saugdruck unterstützt vorteilhafterweise die Prozessluftströmung durch die einzelnen Filterelemente hindurch.

Des Weiteren ist in einer bevorzugten Ausgestaltung oberhalb des Filters eine Abreinigungseinrichtung für den Filter angeordnet, die zumindest ein Reinigungselement aufweist, das zumindest ein Filterelement überdeckt und Reinigungsluft von oben nach unten durch den Filter bläst.

Der Vorteil dieser Maßnahme besteht darin, dass sich an den Filterflächen der einzelnen Filterelemente ansetzende Gutpartikel sofort während des laufenden Prozesses von der Reinigungsluft abgeblasen werden können, so dass diese Gutpartikel in den Produktbehälter zurückfallen können. Die permanente Abreinigung des Filters hat den Vorteil, dass die Prozessluftmengen über die gesamte Prozesszeit der Behandlung des partikelförmigen Guts konstant gehalten werden können, weil der Durchsatz von Prozessluft durch den Filter auf Grund der permanent freien Filterflächen konstant bleibt.

Besonders bevorzugt ist es dabei, wenn das zumindest eine Reinigungselement auf dem Filter um eine vertikale Drehachse umläuft.

Bei dieser Ausgestaltung ist das Reinigungselement vorzugsweise so dimensioniert, dass es im Wesentlichen nur ein Filterelement überdeckt, wodurch die von dem Reinigungselement ausgestoßene Reinigungsluft zum einen auf nur ein Filterelement konzentriert wirkt, und zum anderen auch die Prozessluftströmung im Filterdom und im Produktbehälter nicht beeinträchtigt, die der Strömung der Reinigungsluft ja gerade entgegengesetzt gerichtet ist. Auch hier kommt insbesondere der Vorteil zum Tragen, dass die Prozessluft im Wesentlichen entlang der Wand des Produktbehälters, des Filterdoms und des Anströmelements nach oben steigt, während die Reinigungsluft auf Grund der erfindungsgemäßen Beabstandung des Filters von der Wand des Filterdoms in einem Bereich nach unten strömt, der näher zur Gehäusemittelachse liegt. Die Reinigungsluft und die Prozessluft, die entgegengesetzt gerichtet strömen, beeinflussen sich somit nur geringfügig.

Durch das Umlaufen des Reinigungselements auf dem Filter werden permanent und gleichmäßig nacheinander und wiederholt die einzelnen Filterelemente nacheinander abgereinigt.

Dabei ist es weiterhin bevorzugt, wenn beidseits des Reinigungselements jeweils ein Abdeckelement angeordnet sind, das dem zumindest einen Filterelement, das gerade abgereinigt wird, das jeweilig benachbarten Filterelement an dessen Oberseite abdecken.

Diese Maßnahme trägt dazu bei, dass sich die nach oben strömende Prozessluft und die nach unten gerichtete Reinigungsluftströmung nicht gegeneinander aufheben, so dass das gerade von dem Reinigungselement überstrichene Filterelement mittels der Reinigungsluft mit gutem Ergebnis abgereinigt werden kann.

In einer weiteren bevorzugten Ausgestaltung weist die Reinigungseinrichtung eine Luftzufuhrleitung für die Reinigungsluft auf, die mit einer Abluftleitung für die entstaubte Prozessluft verbunden ist.

Hierbei ist von Vorteil, dass zur Abreinigung des Filters keine Fremdluft benötigt wird, die zu Kontaminationen oder sonstigen Beeinträchtigungen des partikelförmigen Guts und des Behandlungsprozesses führen könnte. Insbesondere entspricht die Reinigungsluft dann dem Konditionierungszustand der Prozessluft, weil eben die Reinigungsluft von der Prozessluft abgeleitet wird, wodurch der Behandlungsprozess von der Reinigungsluft nicht beeinträchtigt wird.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein ausgewähltes Ausführungsbeispiel der Erfindung ist in der Zeichnung dargestellt und wird mit Bezug auf diese hiernach näher beschrieben. Es zeigen:
- Fig. 1: eine Prozessapparatur zum Behandeln partikelförmigen Guts in einem Ausschnitt und im Längsschnitt entlang der Linie I-I in Fig. 2; und
- Fig. 2: einen Querschnitt durch die Prozessapparatur in Fig. 1 entlang der Linie II-II in Fig. 1.

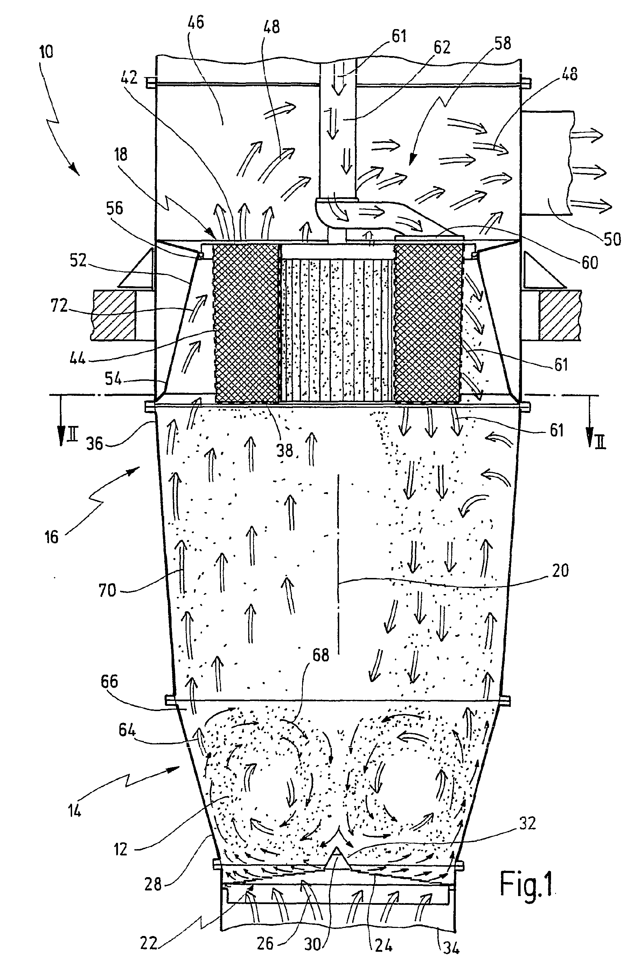

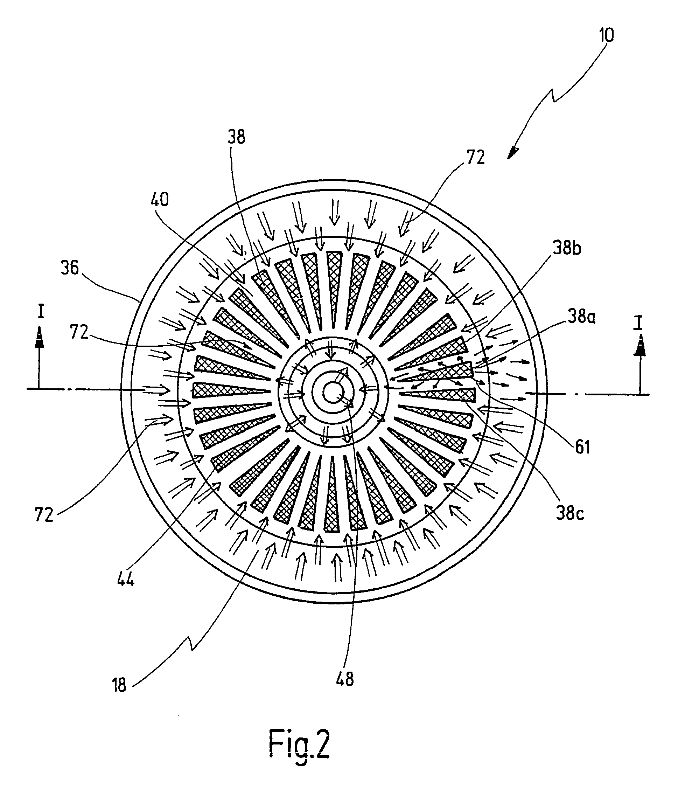

In Fig. 1 und 2 ist eine mit dem allgemeinen Bezugszeichen 10 versehene Prozessapparatur zum Behandeln partikelförmigen Guts 12 dargestellt. Das partikelförmige Gut 12 ist in Fig. 1 durch eine Vielzahl von Punkten veranschaulicht.

Die mit der Prozessapparatur 10 durchgeführte Behandlung des partikelförmigen Guts 12 kann beispielsweise in einem Mischen, Trocknen, Granulieren, Coaten und/oder Pelletieren bestehen. In der Prozessapparatur 10 wird das zu behandelnde partikelförmige Gut 12 mittels eines Luftstroms aus Prozessluft bewegt, wobei die Bewegung in einer Fluidisierung des Guts besteht, die sich von typischen Wirbelschichtapparaturen unterscheidet, wie hiernach noch beschrieben wird.

Die Prozessapparatur 10 weist allgemein einen Produktbehälter 14 auf, in dem die eigentliche Behandlung des partikelförmigen Guts 12 stattfindet. An den Produktbehälter 14 schließt sich oben allgemein ein Filterdom 16 an, in dessen oberen Bereich ein Filter 18 angeordnet ist.

Die Prozessapparatur 10 weist eine vertikale Gehäusemittelachse 20 auf, bezüglich der der Produktbehälter 14, der Filterdom 16 und der Filter 18 im Wesentlichen rotationssymmetrisch ausgebildet sind.

Der Produktbehälter 14 weist einen luftdurchlässigen Boden 22 auf. Der Boden 22 ist aus einer Mehrzahl von übereinandergelegten, sich einander überlappenden Leitplatten 24 aufgebaut, zwischen denen jeweils Schlitze ausgebildet sind, über die von unten zugeführte Prozessluft 26 mit einer im Wesentlichen horizontalen Strömungskomponente in den Produktbehälter 14 eintritt, und zwar zu einer Wand 28 des Produktbehälters 14 hin gerichtet.

Es kann eine Höhenstellvorrichtung für die Leitplatten 24 vorgesehen sein, durch die der Abstand der Leitplatten 24 untereinander und somit die Höhe der Schlitze zwischen den Leiterplatten 24 veränderbar ist. Der Boden 22 kann insbesondere und vorzugsweise ein solcher Boden sein, wie er in der deutschen Patentanmeldung 102 48 116.4 desselben Anmelders beschrieben ist, wobei der Offenbarungsgehalt der zuvor genannten Patentanmeldung bezüglich der Ausgestaltung des Bodens 22 vollständig in die Offenbarung der vorliegenden Patentanmeldung einbezogen ist.

In der Mitte des Bodens 22 ist eine Sprüheinrichtung 30 angeordnet, mit der ein Überzugsmedium 32 im Wesentlichen quer zur Gehäusemittelachse 20 auf das in dem Produktbehälter 14 bewegte partikelförmige Gut 12 vollumfänglich bezüglich der Gehäusemittelachse 20 aufgesprüht wird.

Die Wand 28 des Produktbehälters 14 erweitert sich von unten nach oben, wie in Fig. 1 dargestellt ist.

Unter dem Boden 22 des Produktbehälters 14 befindet sich eine nur ausschnittsweise dargestellte Zuluftkammer 34 für die Prozessluft 26, die auch als Zuluftwindhaus bezeichnet wird. Des Weiteren kann sich an die Zuluftkammer 34 unten noch ein Entleerungstrichter (nicht dargestellt) zum Entleeren des partikelförmigen Guts 12 nach dessen Behandlung anschließen.

An die Wand 28 des Produktbehälters 14 schließt sich nach oben eine Wand 36 des Filterdoms 16 an. Die Wand 36 erweitert sich wie die Wand 28 von unten nach oben, jedoch unter einem kleineren Winkel zur Gehäusemittelachse 20 als die Wand 28 des Produktbehälters 14.

Der im oberen Bereich des Filterdoms 16 angeordnete Filter 18 weist eine Mehrzahl von Filterelementen 38 auf (vgl. insbesondere Fig. 2), die in Umfangsrichtung um die Gehäusemittelachse 20 verteilt voneinander beabstandet angeordnet sind, und wie aus Fig. 1 und 2 hervorgeht, jeweils eine Ausdehnung quer und parallel zur Gehäusemittelachse 20 aufweisen. Die einzelnen Filterelemente 38 sind im Querschnitt in der Form von Kuchenstücken etwa dreieckig und jeweils aus einem Edelstahlkorb gebildet, auf dem ein stabiles PoLyethylen-Filtergewebe aufliegt. Die Filterelemente 38 sind demnach als einzelne separate Taschen ausgebildet, wobei die einzelnen Filterelemente 38, wie insbesondere aus Fig. 2 hervorgeht, etwa sternförmig um die Gehäusemittelachse 20 herum angeordnet sind. Zwischen den einzelnen Filterelementen 38 sind jeweils Zwischenräume 40 vorhanden. Am oberen Ende weist der Filter 18 eine Abdeckplatte 42 auf, die die oberen Enden der Zwischenräume 40 verschließen, jedoch die oberen Stirnseiten der Filterelemente 38 freilassen, so dass durch die oberen Stirnseiten der Filterelemente 38 Luft austreten kann.

Der Filter 18 kann so ausgestaltet sein, wie er in dem Dokument DE-A-101 25 732 insbesondere in den dortigen Figuren 12 und 13 dargestellt und in dem Dokument beschrieben ist. Bei dem dort beschriebenen Filter sind die einzelnen Filterelemente im Querschnitt linsenförmig, während sie gemäß Fig. 2 der vorliegenden Anmeldung im Querschnitt dreieckig ausgebildet sind, wobei auch die linsenförmige Ausgestaltung für die Filterelemente 38 in Betracht gezogen werden kann.

Eine Außenkontur 44 des Filters 18 ist in dem gezeigten Ausführungsbeispiel zylindrisch und erstreckt sich in Richtung der Gehäusemittelachse 20 parallel zu dieser.

Oberhalb des Filters 18 ist eine Abluftkammer 46 bzw. ein Abluftwindhaus zur Abführung der entstaubten Prozessluft 48 aus der Prozessapparatur 10 heraus angeordnet, in der ein Saugdruck ansteht, so dass die Prozessluft 48 durch die einzelnen Filterelemente 38 nach oben bzw. durch das Zentrum des Filters 18 heraus abgesaugt wird. Die entstaubte Prozessluft 48 wird durch eine Abluftleitung 50 abgeführt.

Der Filter 18 ist, wie in Fig. 1 dargestellt, außenumfänglich von einem sich von unten nach oben verjüngenden Anströmelement 52 umgeben, das in Form eines Konus, genauer gesagt in Form eines Kegelstumpfes ausgebildet ist. Wie aus Fig. 1 hervorgeht, ist der Filter 18 außenumfänglich von der Wand 36 des Filterdoms 16 deutlich beabstandet, wodurch das Vorsehen des Anströmelements 52 um den Filter 18 herum ermöglicht wird. Ein unteres Ende 54 des Anströmelements 52 liegt an der Wand 36 des Filterdoms 16 an, und ist entsprechend von dem unteren Ende des Filters 18 ebenfalls deutlich beabstandet, wobei der genannte Abstand im Bereich von etwa 1/5 bis etwa 1/2 der Ausdehnung des Filters 18 in Richtung quer zur Gehäusemittelachse 20 beträgt.

Im Bereich des oberen Endes des Filters bzw. im Bereich des oberen Endes 56 des Anströmelements 52 ist das Anströmelement 52 weniger weit von dem Filter 18 beabstandet, wobei dieser Abstand auch 0 sein kann, wobei der Abstand allgemein im Bereich von etwa 0 bis etwa 1/5 der Ausdehnung des Filters 18 in Richtung quer zur Gehäusemittelachse 20 beträgt.

Das Anströmelement 52 weist eine Höhe in Richtung der Gehäusemittelachse 20 auf, die der Höhe des Filters 18 entspricht, wobei das untere Ende 54 des Anströmelements etwa auf Höhe des unteren Endes des Filters und das obere Ende 56 des Anströmelements 52 etwa auf Höhe des oberen Endes des Filters 18 angeordnet ist.

Während das Anströmelement in Fig. 1 als Konus dargestellt ist, könnte das Anströmelement 52 von der Gehäusemittelachse 20 aus gesehen auch konkav gewölbt ausgebildet sein.

Oberhalb des Filters 18 ist weiterhin eine Abreinigungseinrichtung 58 für den Filter 18 angeordnet, die ein Reinigungselement 60 aufweist. Das Reinigungselement 60 ist als Blasschuh ausgebildet, das Reinigungsluft von oben nach unten durch den Filter 18 bläst, und zwar jeweils nur durch ein einzelnes Filterelement 38. Das Reinigungselement 60 ist mit einer Luftzufuhrleitung 62 für die Reinigungsluft 61 verbunden, die wiederum mit der Abluftleitung 50 für die entstaubte Prozessluft 48 verbunden ist (nicht dargestellt). Auf diese Weise wird die entstaubte Prozessluft 48 teilweise wieder als Reinigungsluft 61 zur Abreinigung des Filters 18 verwendet.

Damit sukzessive alle Filterelemente 38 des Filters 18 mittels der Reinigungsluft 61 abgereinigt werden können, läuft das Reinigungselement 60 auf dem Filter 18 um eine vertikale Drehachse, die mit der Gehäusemittelachse 20 zusammenfällt, um.

Das Reinigungselement 60 weist (nicht dargestellt) beidseits jeweils ein Abdeckelement auf, so dass jeweils die Filterelemente 38b und 38c abgedeckt sind, die dem Filterelement 38a benachbart sind, das gerade abgereinigt wird (vgl. Fig. 2). Durch die abgedeckten Filterelemente 38b und 38c wird somit gerade keine Prozessluft angesaugt, wenn das FiltereLement 38a abgereinigt wird.

Nachfolgend wird die Funktionsweise der Prozessapparatur 10 sowie die besondere Art der Prozessluftführung innerhalb der Prozessapparatur 10 näher beschrieben.

Die Prozessluft 26, die von unten durch den Boden 22 in den Produktbehälter 14 zugeführt wird, tritt, wie bereits oben beschrieben, mit im Wesentlichen horizontaler Strömungskomponente zur Wand 28 des Produktbehälters 14 hin gerichtet in diesen ein und strömt somit hauptsächlich entlang der Wand 28 in den Produktbehälter nach oben, wie im Produktbehälter 14 mit Pfeilen 64 veranschaulicht ist. Diese sich im Produktbehälter 14 ausbreitende Prozessluftströmung 64 bewegt das partikelförmige Gut 12 zunächst ebenfalls hauptsächlich entlang der Wand 28 des Produktbehälters 14 bis in den oberen Bereich des Produktbehälters 14 (etwa bis 66). Durch die vorliegende Ausgestaltung des Bodens 22 entsteht eine Luftkissenbildung unter dem partikelförmigen Gut 12, wodurch sich eine radiale, tangentiale, vertikale und zentrifugale, d.h. orbitale Produktumwälzung in dem Produktbehälter 14 einstellt, die im oberen Bereich 66 des Produktbehälters 14 zur Gehäusemittelachse 20 hin gerichtet und etwa auf der Gehäusemittelachse 20 nach unten gerichtet ist, wie mit dünnen Pfeilen 68 angedeutet ist. Die Prozessluftströmung 64 breitet sich dann vom Produktbehälter 14 in den Filterdom 16 aus, und dort im Wesentlichen an der Wand 36 des Filterdoms 16 nach oben.

Der in dem Produktbehälter 14 im Bereich der Gehäusemittelachse 20 zum Boden 22 zurückfallende Teil des partikelförmigen Guts wird zentrisch im Produktbehälter 14 mittels der Sprüheinrichtung 30 mit dem Überzugsmedium 32 fortlaufend besprüht.

Die sich im Filterdom 16 nach oben ausbreitende Prozessluftströmung 70 führt insbesondere zu Beginn des Behandlungsprozesses Partikel des partikelförmigen Guts 12 mit sich, wobei das Gemisch aus Prozessluft und Partikeln des partikelförmigen Guts 12 zum Filter 18 gelangt.

Auf Grund der Ausgestaltung des Filters 18 mit geringerem Außendurchmesser und auf Grund des Anströmelements 52 tritt nun die Prozessluftströmung 70 nicht nur über die untere Stirnseite des Filters 18 in diesen ein, sondern tritt auch zumindest teilweise oder sogar überwiegend seitlich über die gesamte Höhe des Filters 18 in die Zwischenräume 40 zwischen die einzelnen Filterelemente 38 und seitlich in die Filterelemente 38 ein, wie mit Pfeilen 72 veranschaulicht ist, wodurch die Prozessluft von den mitgeführten Partikeln des partikelförmigen Guts 12 getrennt, d.h. entstaubt wird. Bei der Trennung fällt bereits ein Großteil der mitgeführten Partikel des partikelförmigen Guts 12 wieder in den Produktbehälter 14 zurück.

Gleichzeitig wird mittels der Abreinigungseinrichtung 58 der Filter 18 permanent mit der Reinigungsluft 61 abgereinigt, wodurch auch die an den einzelnen Filterelementen 38 anhaftenden Partikel des partikelförmigen Guts vom Filter 18 gelöst werden, so dass diese ebenfalls in den Produktbehälter 14 zurückfallen und dem dort stattfindenden Prozess wieder zugeführt werden.

Dadurch, dass der Filter 18 nicht nur wie im Stand der Technik von seiner Unterseite her mit der staubigen Prozessluft beaufschlagt wird, sondern auch von seiner seitlichen Außenumfangsseite her, ist die flächenbezogene Filterbelastung des Filters 18 wesentlich geringer, und die gesamte Filterfläche des Filters 18 wird wesentlich effektiver und gleichmäßiger genutzt.

Die nach oben durch den Filter 18 hindurchtretende entstaubte Prozessluft 48 wird dann über die Abluftkammer 46 und die Abluftleitung 50 aus der Prozessapparatur 10 abgeführt, wobei ein Teil der entstaubten Prozessluft, wie bereits oben beschrieben, über die Luftzufuhrleitung 62 als Reinigungsluft 61 zum Abreinigen des Filters 18 wiederverwendet wird.

## Patentansprüche

1. Prozessapparatur zum Behandeln partikelförmigen Guts (12), mit einem Produktbehälter (14) zur Aufnahme des partikelförmigen Guts (12), der einen luftdurchlässigen Boden (22) zum Zuführen von Prozessluft in den Produktbehälter (14) aufweist, einem sich nach oben an den Produktbehälter (14) anschließenden Filterdom (16), und einem im Filterdom (16) angeordneten Filter (18) zum Entstauben der Prozessluft, wobei der Filter (18) eine Mehrzahl von Filterelementen (38) aufweist, die in Umfangsrichtung um eine etwa vertikale Gehäusemittelachse (20) verteilt voneinander beabstandet angeordnet sind und jeweils eine Ausdehnung quer und parallel zur Gehäusemittelachse (20) aufweisen, **dadurch gekennzeichnet, dass** der Filter (18) außenumfänglich von einem sich von unten nach oben verjüngenden Amströmelement (52) umgeben ist, das von dem Filter (18) in. Richtung quer zur Gehäusemittelachse (20) beabstandet ist, und dessen unteres Ende (54) an einer Wand (36) des Filterdoms (16) anliegt, so dass zumindest die entlang der Wand (36) des Filterdoms (16) und entlang des Anströmelements (52) strömende Prozessluft seitlich in den Filter (18) strömen kann.

2. Prozessapparatur nach Anspruch 1, **dadurch gekennzeichnet, dass** das Anströmelement (52) ein Konus ist.

3. Prozessapparatur nach Anspruch 1, **dadurch gekennzeichnet, dass** das Anströmelement (52) von der Gehäusemittelachse (20) aus gesehen konkav gewölbt ist.

4. Prozessapparatur nach einem der Ansprüche 1 bis 3, **dadurch gekennzeichnet, dass** das untere Ende (54) des Anströmelements (52) etwa auf Höhe des unteren Endes des Filters (18) und ein oberes Ende (56) des Anströmelements (52) etwa auf Höhe des oberen Endes des Filters (18) angeordnet ist.

5. Prozessapparatur nach einem der Ansprüche 1 bis 4, **dadurch gekennzeichnet, dass** eine Außenkontur des Filters (18) etwa parallel zur Gehäusemittelachse (20) verläuft, so dass das Anströmelement (52) im unteren Bereich weiter vom Filter (18) beabstandet ist als in einem oberen Bereich.

6. Prozessapparatur nach einem der Ansprüche 1 bis 5, **dadurch gekennzeichnet, dass** ein Abstand zwischen dem Anströmelement (52) und dem Filter (18) im Bereich des unteren Endes des Filters (18) etwa 1/5 bis etwa 1/2 der Ausdehnung des Filters (18) in Richtung quer zur Gehäusemittelachse (20) beträgt.

7. Prozessapparatur nach einem der Ansprüche 1 bis 6, **dadurch gekennzeichnet, dass** ein Abstand zwischen dem Anströmelement (52) und dem Filter (18) im Bereich des oberen Endes des Filters (18) etwa 0 bis etwa 1/5 der Ausdehnung des Filters (18) in Richtung quer zur Gehäusemittelachse (20) beträgt.

8. Prozessapparatur nach einem der Ansprüche 1 bis 7, **dadurch gekennzeichnet, dass** sich eine Wand (28) des Produktbehälters (14) von unten nach oben erweitert, und dass sich die Wand (36) des Filterdoms (16) von unten nach oben erweitert, jedoch unter einem kleineren Winkel zur Gehäusemittelachse (20) als der Produktbehälter (14).

9. Prozessapparatur nach einem der Ansprüche 1 bis 8, **dadurch gekennzeichnet, dass** der Boden (22) so ausgebildet ist, dass er die von unterhalb des Bodens (22) zugeführte Prozessluft mit im wesentlichen horizontaler, zu einer Wand (28) des Produktbehälters (14) gerichteter Bewegungskomponente in den Produktbehälter (14) einleitet.

10. Prozessapparatur nach einem der Ansprüche 1 bis 9, **dadurch gekennzeichnet, dass** die Filterelemente (38) als einzelne separate Taschen ausgebildet sind, die etwa sternförmig mm die Gehäusemittelachse (20) herum angeordnet sind.

11. Prozessapparatur nach einem der Ansprüche 1 bis 10, **dadurch gekennzeichnet, dass** oberhalb des Filters (18) eine Abluftkammer (46) zur Abführung der entstaubten Prozess - luft aus der Prozessapparatur (10) heraus angeordnet ist, in der ein Saugdruck ansteht, so dass die Prozesslufft durch die einzelnen Filterelemente (38) nach oben heraus abgesaugt werden kann.

12. Prozessapparatur nach einem der Ansprüche 1 bis 11, **dadurch gekennzeichnet, dass** oberhalb des Filters (18) eine Abreinigungseinrichtung (58) für den Filter (18) angeordnet ist, die zumindest ein Reinigungselement (60) aufweist, das zumindest ein Filterelement (38) überdeckt und Reinigungsluft von oben nach unten durch den Filter (18) bläst.

13. Prozessapparatur nach Anspruch 12, **dadurch gekennzeichnet, dass** das zumindest eine Reinigungselement (60) auf dem Filter (18) um eine vertikale Drehachse umlaufen kann.

14. Prozessapparatur nach Anspruch 12 oder 13, **dadurch gekennzeichnet, dass** beidseits des Reinigungselements (60) jeweils ein Abdeckelement angeordnet ist, das das dem zumindest einen Filterelement (38a), das gerade abgereinigt wird, jeweilig benachbarte Filterelement (38b, 38c) an dessen Oberseite abdeckt.

15. Prozessapparatur nach Anspruch 11 und einem der Ansprüche 12 bis 14, **dadurch gekennzeichnet, dass** die Abreinigungseinrichtung (58) eine Luftzufuhrleitung (62) für die Reinigungsluft aufweist, die mit einer Abluftleitung (50) für die entstaubte Prozessluft verbunden ist.

## Claims

1. Process apparatus for treating particulate material (12), comprising a product container (14) for accommodating the particulate material (12), which has an air permeable bottom (22) for feeding process air into the product container (14), a filter dome (16) upwardly adjacent to the product container (14), and a filter (18) arranged in the filter dome (16) for de-dusting the process air, wherein the filter (18) has a plurality of filter elements (38) arranged in circumferential direction about an approximately vertical housing center axis (20) in distributed and mutually spaced fashion and each having a dimension transversely and parallel to the housing center axis (20), **characterized in that** the filter (18) is surrounded at its outer circumference by an approach flow element (52) tapering from below to the top, which is spaced apart from the filter (18) in direction transverse to the housing center axis (20), and a lower end (54) of which rests against a wall (36) of the filter dome (16) so that at least the process air flowing along the wall (36) of the filter dome (16) and along the approach flow element (52) can flow into the filter (18) from the side.

2. Process apparatus of claim 1, **characterized in that** the approach flow element (52) is a cone.

3. Process apparatus of claim 1, **characterized in that** the approach flow element (52) is concavely curved when seen from the housing center axis (20).

4. Process apparatus of any one of claims 1 through 3, **characterized in that** the lower end (54) of the approach flow element (52) is arranged approximately at the height of the lower end of the filter (18), and an upper end (56) of the approach flow element (52) is arranged approximately at the height of the upper end of the filter (18).

5. Process apparatus of any one of claims 1 through 4, **characterized in that** an outer contour of the filter (18) runs approximately parallel to the housing center axis (20) so that the approach flow element (52) is more spaced apart from the filter (18) in the lower region than in an upper region.

6. Process apparatus of any one of claims 1 through 5, **characterized in that** a distance between the approach flow element (52) and the filter (18) in the region of the lower end of the filter (18) is approximately 1/5 to approximately 1/2 of the dimension of the filter (18) in direction transverse to the housing center axis (20).

7. Process apparatus of any one of claims 1 through 6, **characterized in that** a distance between the approach flow element (52) and the filter (18) in the region of the upper end of the filter (18) is approximately 0 to approximately 1/5 of the dimension of the filter (18) in direction transverse to the housing center axis (20).

8. Process apparatus of any one of claims 1 through 7, **characterized in that** a wall (28) of the product container (14) widens from below to the top, and that the wall (36) of the filter dome (16) widens from below to the top, however by a smaller angle with respect to the housing center axis (20) than the product container (14).

9. Process apparatus of any one of claims 1 through 8, **characterized in that** the bottom (22) is configured such that it passes the process air fed from underneath the bottom (22) into the product container (14) with a substantially horizontal movement component directed to a wall (28) of the product container (14).

10. Process apparatus of any one of claims 1 through 9, **characterized in that** the filter elements (38) are configured as single separate pockets which are arranged about the housing center axis (20) in an approximately star-shaped fashion.

11. Process apparatus of any one of claims 1 through 10, **characterized in that** an air escape chamber (46) for leading out the de-dusted process air from the process apparatus (10) is arranged above the filter (18), in which an underpressure is present so that the process air can be sucked off through the single filter elements (38) upwardly.

12. Process apparatus of any one of claims 1 through 11, **characterized in that** a cleaning device (58) for the filter (18) is arranged above the filter (18), which has at least one cleaning element (60) which covers at least one filter element (38) and blows cleaning air from above to bottom through the filter (18).

13. Process apparatus of claim 12, **characterized in that** the at least one cleaning element (60) can revolve on the filter (18) about a vertical rotation axis.

14. Process apparatus of claim 12 or 13, **characterized in that** on both sides of the cleaning element (60) a cover element is arranged, respectively, which covers the respective filter element (38b, 38c) at the upper side thereof which is adjacent the at least one filter element (38a) which is about to be cleaned.

15. Process apparatus of claim 11 and any one of claim 12 through 14, **characterized in that** the cleaning device (58) has an air-feeding line (62) for the cleaning air, which is connected with an air escape line (50) for the de-dusted process air.

## Revendications

1. Appareil de traitement de matière particulaire (12), comportant un récipient de produit (14) pour la réception de la matière particulaire (12), qui présente un fond (22) perméable à l'air pour l'amenée d'air de processus dans le récipient de produit (14), un dôme de filtre (16) se raccordant vers le haut au niveau du récipient de produit (14) et un filtre (18) disposé dans le dôme de filtre (16) pour le dépoussiérage de l'air de processus, le filtre (18) présentant une pluralité d'éléments filtrants (38) qui sont répartis à distance les uns des autres dans le sens périphérique autour d'un axe médian de boîtier (20) à peu près vertical et qui présentent respectivement une extension transversale et parallèle par rapport à l'axe médian de boîtier (20), **caractérisé en ce que** le filtre (18) est entouré sur le pourtour par un élément d'entrée de flux (52) s'effilant du bas vers le haut, qui est espacé du filtre (18) dans la direction transversale par rapport à l'axe médian de boîtier (20) et dont l'extrémité inférieure (54) s'appuie contre une paroi (36) du dôme de filtre (16) de sorte qu'au moins l'air de processus s'écoulant le long de la paroi (36) du dôme de filtre (16) et le long de l'élément d'entrée de flux (52) peut au moins s'écouler latéralement dans le filtre (18).

2. Appareil selon la revendication 1, **caractérisé en ce que** l'élément d'entrée de flux (52) est un cône.

3. Appareil selon la revendication 1, **caractérisé en ce que** l'élément d'entrée de flux (52) est en cuvette vue depuis l'axe médian de boîtier (20).

4. Appareil selon l'une quelconque des revendications 1 à 3, **caractérisé en ce que** l'extrémité inférieure (54) de l'élément d'entrée de flux (52) est agencée approximativement à hauteur de l'extrémité inférieure du filtre (18) et une extrémité supérieure (56) de l'élément d'entrée de flux (52) approximativement à hauteur de l'extrémité supérieure du filtre (18).

5. Appareil selon l'une quelconque des revendications 1 à 4, **caractérisé en ce qu'**un contour extérieur du filtre (18) s'étend à peu près parallèlement à l'axe médian de boîtier (20) de sorte que l'élément d'entrée de flux (52) est plus espacé du filtre (18) dans la zone inférieure que dans une zone supérieure.

6. Appareil selon l'une quelconque des revendications 1 à 5, **caractérisé en ce qu'**un espacement entre l'élément d'entrée de flux (52) et le filtre (18) dans la zone de l'extrémité inférieure du filtre (18) est d'environ 1/5 à environ 1/2 de l'extension du filtre (18) dans la direction transversale à l'axe médian de boîtier (20).

7. Appareil selon l'une quelconque des revendications 1 à 6, **caractérisé en ce qu'**un espacement entre l'élément d'entrée de flux (52) et le filtre (18) dans la zone de l'extrémité supérieure du filtre (18) est d'environ 0 à environ 1/5 de l'extension du filtre (18) dans la direction transversale à l'axe médian de boîtier (20).

8. Appareil selon l'une quelconque des revendications 1 à 7, **caractérisé en ce qu'**une paroi (28) du récipient de produit (14) s'élargit du bas vers le haut et que la paroi (36) du dôme de filtre (16) s'élargit du bas vers le haut, mais selon un angle par rapport à l'axe médian de boîtier (20) inférieur à celui du récipient de produit (14).

9. Appareil selon l'une quelconque des revendications 1 à 8, **caractérisé en ce que** le fond (22) est réalisé de sorte qu'il introduit l'air de processus amené par le dessous du fond (22) dans le récipient de produit (14) avec une composante de mouvement essentiellement horizontale dirigée vers une paroi (28) du récipient de produit (14).

10. Appareil selon l'une quelconque des revendications 1 à 9, **caractérisé en ce que** les éléments filtrants (38) sont réalisés sous forme de poches individuelles séparées qui sont disposées approximativement en forme d'étoile autour de l'axe médian de boîtier (20).

11. Appareil selon l'une quelconque des revendications 1 à 10, **caractérisé en ce qu'**une chambre d'évacuation d'air (46) pour l'évacuation de l'air de processus dépoussiéré hors de l'appareil (10) est disposée au-dessus du filtre (18), chambre dans laquelle il y a une pression d'aspiration de sorte que l'air de processus peut être aspiré vers le haut par les éléments filtrants (38).

12. Appareil selon l'une quelconque des revendications 1 à 11, **caractérisé en ce qu'**un dispositif de nettoyage (58) pour le filtre (18) est disposé au-dessus du filtre (18), dispositif qui présente au moins un élément de nettoyage (60) qui recouvre au moins un élément filtrant (38) et souffle de l'air de nettoyage du haut vers le bas à travers le filtre (18).

13. Appareil selon la revendication 12, **caractérisé en ce que** l'au moins un élément de nettoyage (60) sur le filtre (18) peut tourner autour d'un axe de rotation vertical.

14. Appareil selon la revendication 12 ou 13, **caractérisé en ce que** respectivement un élément de recouvrement, qui recouvre l'élément filtrant (38b, 38c) respectivement adjacent à l'au moins un élément filtrant (38a), qui est en train d'être nettoyé, au niveau de sa face supérieure, est disposé de part et d'autre de l'élément de nettoyage (60).

15. Appareil selon la revendication 11 et selon l'une quelconque des revendications 12 à 14, **caractérisé en ce que** le dispositif de nettoyage (58) présente une conduite d'amenée d'air (62) pour l'air de nettoyage, laquelle est reliée à une conduite d'évacuation d'air (50) pour l'air de processus dépoussiéré.
